# EUROPEAN PATENT SPECIFICATION

(11) **EP 1 169 358 B1**
(45) Date of publication and mention of the grant of the patent: **11.02.2004**
(21) Application number: 00910261.7
(22) Date of filing: 22.02.2000
(51) Int. Cl.: C08F 8/04

(54) **HYDROGENATED BLOCK COPOLYMERS**
HYDROGENIERTE BLOCK-COPOLYMERE
COPOLYMERES SEQUENCES HYDROGENES

(30) Priority: 19.03.1999 US 125256 P; 11.06.1999 US 330663
(43) Date of publication of application: 09.01.2002
(73) Proprietor: Dow Global Technologies Inc., Midland, Michigan 48674 (US)
(72) Inventor: HAHN, Stephen, F., Midland, MI 48642 (US); HAHNFELD, Jerry, L., Midland, MI 48642 (US); HUCUL, Dennis, A., Midland, MI 48642 (US)
(74) Representative: Raynor, John
(86) International application number: PCT/US2000/004359
(87) International publication number: WO 2000/056782

(56) References cited:
- US-A- 4 400 478
- US-A- 4 882 384

## Description

This invention relates to hydrogenated block copolymers. This invention particularly relates to hydrogenated block copolymers comprising hydrogenated blocks of a vinyl aromatic polymer and of a conjugated diene polymer.

Hydrogenated block copolymers of vinyl aromatic and conjugated dienes such as styrene-butadiene-styrene copolymers are well known in the art. US-A-3,333,024 and US-A-3,431,323 disclose hydrogenated triblock (ABA) copolymers of vinyl aromatic and conjugated diene polymers having a 20 to 30 percent hydrogenation level and improved tensile properties, when compared to their non-hydrogenated counterparts. However, such copolymers containing very low molecular weight hydrogenated polystyrene blocks, for example 4,000, have low heat resistance and do not afford rigid compositions with good physical properties. US-A-3,598,886 discloses hydrogenated vinyl substituted aromatic hydrocarbon-conjugated diene block copolymers having less than 3 percent aromatic unsaturation, however low molecular weight polymers are exemplified, which do not offer good physical properties. US-A-5,352,744 discloses hydrogenated poly(alkylaromatic)/polydiene block copolymers having a 99.5 hydrogenation level. However, these polymers reach high molecular weights of greater than 400,000 which are very difficult to process in fabrication operations, particularly molding applications. Additionally, US-A-3,644,588 discloses a hydrogenated styrene-isoprene-styrene block copolymer having a Mw of 100,000. However, this reference also suggests lower levels of aromatic hydrogenation (40 and 75 percent) which results in low heat resistance, poor processability, and poor light stability. EP-505,110 also teaches hydrogenated block copolymers of 30,000 to 400,000 Mw and 60 to 80 percent aromatic hydrogenation. However, these polymers suffer from the same deficiencies as described above. Moreover, Thermoplastic Elastomers, Chapter 14, Ed. N.R. Legge, et al., Hanser Publishers, New York, 1987 discloses that fully hydrogenated block copolymers have generally poor physical properties at only slightly elevated temperatures.

Therefore, there remains a need for clear, highly hydrogenated block copolymers of a vinyl aromatic polymer and a conjugated diene polymer, which are processable in conventional manufacturing processes and possess useful physical properties at standard and elevated temperatures.

In one aspect, the present invention is a hydrogenated block copolymer comprising at least two distinct blocks of hydrogenated polymerized vinyl aromatic monomer, herein referred to as hydrogenated vinyl aromatic polymer blocks, and at least one block of hydrogenated polymerized conjugated diene monomer, herein referred to as hydrogenated conjugated diene polymer block, wherein the hydrogenated copolymer is characterized by:
a) a total number average molecular weight (Mnₗ) of from 30,000 to 120,000, wherein each hydrogenated vinyl aromatic polymer block (A) has a Mnₐ of from 5,000 to 50,000 and each hydrogenated conjugated diene polymer block (B) has a Mn_{b} of from 4,000 to 110,000; and
b) a hydrogenation level such that each hydrogenated vinyl aromatic polymer block has a hydrogenation level of greater than 90 percent and each hydrogenated conjugated diene polymer block has a hydrogenation level of greater than 95 percent.

Hydrogenated block copolymers having these Mn and hydrogenation characteristics are transparent to light at visible wavelengths and are ideally suited for conventional manufacturing applications, while possessing excellent properties at both standard and elevated temperatures. It has been discovered that hydrogenated copolymers having both the high hydrogenation levels and Mn limitations, as defined by the hydrogenated copolymers of the present invention, have superior properties and processability characteristics, compared to the hydrogenated copolymers of the prior art. The combination of transparency, high glass transition temperature, low water absorption, and excellent melt processability makes these materials ideal candidates for many applications including fabricated articles, thermoformed articles, extruded articles, injection molded articles, films, and foams.

The present invention relates to a hydrogenated block copolymer prepared by hydrogenating a block copolymer produced from at least one vinyl aromatic monomer and at least one conjugated diene monomer.

The vinyl aromatic monomer is typically a monomer of the formula: 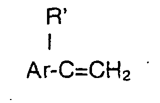 wherein R' is hydrogen or alkyl, Ar is phenyl, halophenyl, alkylphenyl, alkylhalophenyl, naphthyl, pyridinyl, or anthracenyl, wherein any alkyl group contains 1 to 6 carbon atoms which may be mono or multisubstituted with functional groups such as halo, nitro, amino, hydroxy, cyano, carbonyl and carboxyl. More preferably Ar is phenyl or alkyl phenyl with phenyl being most preferred. Typical vinyl aromatic monomers include styrene, alpha-methylstyrene, all isomers of vinyl toluene, especially paravinyltoluene, all isomers of ethyl styrene, propyl styrene, butyl styrene, vinyl biphenyl, vinyl naphthalene, and vinyl anthracene, and mixtures thereof. The pentablock copolymer can contain more than one specific polymerized vinyl aromatic monomer. In other words, for example, the pentablock copolymer can contain a polystyrene block and a poly-alpha-methylstyrene block. The hydrogenated vinyl aromatic polymer block may also be a copolymer of a vinyl aromatic wherein the vinyl aromatic portion is at least 50 weight percent of the copolymer.

The conjugated diene monomer can be any monomer having two conjugated double bonds. Such monomers include for example 1,3-butadiene, 2-methyl-1,3-butadiene, 2-methyl-1,3 pentadiene, isoprene and similar compounds, and mixtures thereof.

The conjugated diene polymer block can be prepared from materials which remain amorphous after the hydrogenation process, or materials which are capable of crystallization after hydrogenation. Hydrogenated polyisoprene blocks remain amorphous, while hydrogenated polybutadiene blocks can be either amorphous or crystallizable depending upon their structure. Polybutadiene can contain either a 1,2 configuration, which hydrogenates to give the equivalent of a 1-butene repeat unit, or a 1,4-configuration, which hydrogenates to give the equivalent of an ethylene repeat unit. Polybutadiene blocks having at least approximately 40 weight percent 1,2-butadiene content, based on the weight of the polybutadiene block, provides substantially amorphous blocks with low glass transition temperatures upon hydrogenation. Polybutadiene blocks having less than approximately 40 weight percent 1,2-butadiene content, based on the weight of the polybutadiene block, provide crystalline blocks upon hydrogenation. Depending on the final application of the polymer it may be desirable to incorporate a crystalline block (to improve solvent resistance) or an amorphous, more compliant block. In some applications, the block copolymer can contain more than one conjugated diene polymer block, such as a polybutadiene block and a polyisoprene block. The conjugated diene polymer block may also be a copolymer of a conjugated diene, wherein the conjugated diene portion of the copolymer is at least 50 weight percent of the copolymer.

Other polymeric blocks may also be included in the hydrogenated block copolymers of the present invention.

A block is herein defined as a polymeric segment of a copolymer which exhibits microphase separation from a structurally or compositionally different polymeric segment of the copolymer. Microphase separation occurs due to the incompatibility of the polymeric segments within the block copolymer. Microphase separation and block copolymers are widely discussed in "Block Copolymers-Designer Soft Materials", PHYSICS TODAY, February, 1999, pages 32-38.

The hydrogenated block copolymers of the present invention typically contain from 1 to 99 weight percent of a hydrogenated vinyl aromatic polymer, e.g. polyvinylcyclohexane or PVCH block, generally from 10, preferably from 15, more preferably from 20, even more preferably from 25, and most preferably from 30 to 90 weight percent, preferably to 85 and most preferably to 80 percent, based on the total weight of the hydrogenated block copolymer.

The hydrogenated block copolymers of the present invention typically contain from 1 to 99 weight percent of a hydrogenated conjugated diene polymer block, preferably from 10, more preferably from 15, and most preferably from 20 to 90 weight percent, typically to 85, preferably to 80, more preferably to 75, even more preferably to 70 and most preferably to 65 percent, based on the total weight of the copolymer.

In applications where properties such as high modulus are important, the copolymer will contain at least 65 weight percent of a hydrogenated vinyl aromatic polymer block. In applications where an elastomer is preferred, the copolymer will contain at least 60 weight percent of a hydrogenated conjugated diene polymer block.

The hydrogenated block copolymers of the present invention are produced by the hydrogenation of block copolymers including triblock, multiblock, tapered block, and star block copolymers such as SBS, SBSBS, SIS, SISIS, and SISBS (wherein S is polystyrene, B is polybutadiene and I is polyisoprene). The block copolymers contain at least one triblock.segment comprised of a vinyl aromatic polymer block on each end. The block copolymers may, however, contain any number of additional blocks, wherein these blocks may be attached at any point to the triblock polymer backbone. Thus, linear blocks would include for example SBS, SBSB, SBSBS, and SBSBSB. The copolymer can also be branched, wherein polymer chains are attached at any point along the copolymer backbone.

The total number average molecular weight (Mnₜ) of the hydrogenated block copolymers of the present invention is typically from 30,000, preferably from 40,000, more preferably from 45,000 and most preferably from 50,000 to 120,000, typically to 100,000, generally to 95,000, preferably to 90,000, more preferably to 85,000, and most preferably to 80,000. Number average molecular weight (Mn) as referred to throughout this application is determined using gel permeation chromatography (GPC). The molecular weight of the hydrogenated block copolymer and properties obtained are dependent upon the molecular weight of each of the hydrogenated polymeric blocks. It has been discovered that by optimizing the molecular weight of the hydrogenated polymeric blocks, hydrogenated block copolymers of low molecular weight (30,000 to 120,000) can achieve high heat distortion temperatures and excellent toughness and tensile strength properties. Surprisingly, we have found that good physical properties can be obtained at relatively low hydrogenated block copolymer molecular weights which gives superior processability.

Typical number average molecular weight values (Mnₐ) for each hydrogenated vinyl aromatic polymer block are from 5,000, preferably from 10,000, more preferably from 13,000 and most preferably from 15,000 to 50,000, preferably to 45,000, more preferably to 40,000 and most preferably to 35,000. It should be noted that good properties are obtained at hydrogenated vinyl aromatic polymer molecular weights which are lower than the entanglement molecular weight of the hydrogenated vinyl aromatic polymer. The entanglement molecular weight of a polymer is associated with the chain length required for a given polymer to show a dramatic increase in melt viscosity due to chain entanglements. The entanglement molecular weights for many common polymers have been measured and reported in Macromolecules, 1994, Volume 27, page 4639. It is commonlv observed for glassy polymers that maximum values of strength and toughness are achieved at about 10 times the entanglement molecular weight (see for instance Styrene Polymers in the Encyclopedia of Polymer Science and Engineering, 2nd edition, Volume 16, pages 62-71, 1989). The entanglement molecular weight is approximately 38,000 for polyvinylcyclohexane. We have determined that an optimum balance of properties and processability can be obtained at hydrogenated vinyl aromatic polymer block molecular weights (Mnₐ) of 0.2 to 1.2 times the entanglement molecular weight of a hydrogenated vinyl aromatic polymer. In general, the optimum Mnₐ for a hydrogenated polystyrene block in the hydrogenated block copolymer of the present invention is from 7,000 to 45,000.

The molecular weight (Mn_{b}) of each hydrogenated conjugated diene polymer block is typically lower than that of the hydrogenated vinyl aromatic polymer block when a high modulus, rigid polymer is desired. When a low modulus elastomeric polymer is desired, the Mn_{b} of the hydrogenated diene polymer block can be higher than the hydrogenated vinyl aromatic polymer block. The Mn_{b} of the hydrogenated diene polymer block is typically from 4,000, preferably from 5,000, more preferably from 8,000 and most preferably from 10,000 to 110,000, preferably to 90,000, more preferably to 55,000 and most preferably to 30,000.

The Mn of the hydrogenated blocks will also depend upon the properties desired in the hydrogenated block copolymer produced. If rigid hydrogenated block copolymers are desired, the Mnₐ of the hydrogenated vinyl aromatic polymer block will typically be from 10,000, preferably from 12,000, more preferably from 15,000 and most preferably from 20,000 to 50,000, preferably to 45,000, more preferably to 43,000 and most preferably to 40,000; while the Mn_{b} of the hydrogenated diene polymer block will typically be from 4,000, preferably from 8,000, more preferably from 10,000, and most preferably from 12,000 to 30,000, preferably to 28,000, most preferably to 25,000 and most preferably to 22,000. If elastomeric hydrogenated block copolymers are desired, the Mnₐ of the hydrogenated vinyl aromatic polymer block will typically be from 5,000, preferably from 5,500, more preferably from 6,000, and most preferably from 7,000 to 20,000, preferably to 18,000, more preferably to 16,500 and most preferably to 15,000; while the Mn_{b} of the hydrogenated diene polymer block will typically be from 35,000, preferably from 38,000, more preferably from 40,000 and most preferably from 45,000 to 110,000, preferably to 100,000, more preferably to 90,000 and most preferably to 80,000. Flexible type hydrogenated block copolymers can be achieved by using Mn's somewhere in between the rigid and elastomeric values.

It is important to note that each individual block of the hydrogenated block copolymer of the present invention, can have its own distinct Mn. In other words, for example, two hydrogenated vinyl aromatic polymer blocks within the hydrogenated block copolymer may each have a different Mn.

Methods of making block copolymers are well known in the art. Typically, block copolymers are made by anionic polymerization, examples of which are cited in Anionic Polymerization: Principles and Practical Applications, H.L. Hsieh and R.P. Quirk, Marcel Dekker, New York, 1996. In one embodiment, block copolymers are made by sequential monomer addition to a carbanionic initiator such as sec-butyl lithium or n-butyl lithium. In another embodiment, the copolymer is made by coupling a triblock material with a divalent coupling agent such as 1,2-dibromoethane, dichlorodimethylsilane, or phenylbenzoate. In this embodiment, a small chain (less than 10 monomer repeat units) of a conjugated diene polymer can be reacted with the vinyl aromatic polymer coupling end to facilitate the coupling reaction. Vinyl aromatic polymer blocks are typically difficult to couple, therefore, this technique is commonly used to achieve coupling of the vinyl aromatic polymer ends. The small chain of diene polymer does not constitute a distinct block since no microphase separation is achieved. Coupling reagents and strategies which have been demonstrated for a variety of anionic polymerizations are discussed in Hsieh and Quirk, Chapter 12, pgs. 307-331. In another embodiment, a difunctional anionic initiator is used to initiate the polymerization from the center of the block system, wherein subsequent monomer additions add equally to both ends of the growing polymer chain. An example of a such a difunctional initiator is 1,3-bis(1-phenylethenyl) benzene treated with organolithium compounds, as described in US-A-4,200,718 and US-A-4,196,154.

After preparation of the block copolymer, the copolymer is hydrogenated to remove sites of unsaturation in both the conjugated diene polymer block and the vinyl aromatic polymer block segments of the copolymer. Any method of hydrogenation can be used and such methods typically include the use of metal catalysts supported on an inorganic substrate, such as Pd on BaSO₄ (US-A-5,352,744) and Ni on kieselguhr (US-A-3,333,024). Additionally, soluble, homogeneous catalysts such those prepared from combinations of transition metal salts of 2-ethylhexanoic acid and alkyl lithiums can be used to fully saturate block copolymers, as described in Die Makromolekulare Chemie, Volume 160, pp. 291, 1972. The copolymer hydrogenation can also be achieved using hydrogen and a heterogeneous catalyst such as those described in US-A-5,352,744, US-A-5,612422 and US-A-5,645,253. The catalysts described therein are heterogeneous catalysts consisting of a metal crystallite supported on a porous silica substrate. An example of a silica supported catalyst which is especially useful in the polymer hydrogenation is a silica which has a surface area of at least 10 m²/g and which is synthesized such that is contains pores with diameters ranging between 3000 and 6000 angstroms. This silica is then impregnated with a metal capable of catalyzing hydrogenation of the polymer, such as nickel, cobalt, rhodium, ruthenium, palladium, platinum, other Group VIII metals, combinations or alloys thereof. Other heterogeneous catalysts can also be used, having diameters in the range of 500 to 3,000 angstroms.

Alternatively, the hydrogenation can be conducted in the presence of a mixed hydrogenation catalyst characterized in that it comprises a mixture of at least two components. The first component comprises any metal which will increase the rate of hydrogenation and includes nickel, cobalt, rhodium, ruthenium, palladium, platinum, other Group VIII metals, or combinations thereof. Preferably rhodium and/or platinum is used. The second component used in the mixed hydrogenation catalyst comprises a promoter which inhibits deactivation of the Group VIII metal(s) upon exposure to polar materials, and is herein referred to as the deactivation resistant component. Such components preferably comprise rhenium, molybdenum, tungsten, tantalum or niobium or mixtures thereof.

The amount of the deactivation resistant component is at least an amount which significantly inhibits the deactivation of the Group VIII metal component when exposed to polar impurities within a polymer composition, herein referred to as a deactivation inhibiting amount. Deactivation of the Group VIII metal is evidenced by a significant decrease in hydrogenation reaction rate. This is exemplified in comparisons of a mixed hydrogenation catalyst and a catalyst containing only a Group VIII metal component under identical conditions in the presence of a polar impurity, wherein the catalyst containing only a Group VIII metal component exhibits a hydrogenation reaction rate which is less than 75 percent of the rate achieved with the mixed hydrogenation catalyst.

Preferably, the amount of deactivation resistant component is such that the ratio of the Group VIII metal component to the deactivation resistant component is from 0.5:1 to 10:1, more preferably from 1:1 to 7:1, and most preferably from 1:1 to 5:1.

The mixed catalyst can consist of the components alone, but preferably the catalyst additionally comprises a support on which the components are deposited. In one embodiment, the metals are deposited on a support such as a silica, alumina or carbon. In a more specific embodiment, a silica support having a narrow pore size distribution and surface area greater than 10 meters squared per gram (m2/g) is used.

The pore size distribution, pore volume, and average pore diameter of the support can be obtained via mercury porosimetry following the proceedings of ASTM D-4284-83.

The pore size distribution is typically measured using mercury porosimetry. However, this method is only sufficient for measuring pores of greater than 60 angstroms. Therefore, an additional method must be used to measure pores less than 60 angstroms. One such method is nitrogen desorption according to ASTM D-4641-87 for pore diameters of less than about 600 angstroms. Therefore, narrow pore size distribution is defined as the requirement that at least 98 percent of the pore volume is defined by pores having pore diameters greater than 300 angstroms and that the pore volume measured by nitrogen desorption for pores less than 300 angstroms, be less than 2 percent of the total pore volume measured by mercury porosimetry.

The surface area can be measured according to ASTM D-3663-84. The surface area is typically between 10 and 100 m2/g, preferably between 15 and 90 with most preferably between 50 and 85 m2/g.

The desired average pore diameter is dependent upon the polymer which is to be hydrogenated and its molecular weight (Mn). It is preferable to use supports having higher average pore diameters for the hydrogenation of polymers having higher molecular weights to obtain the desired amount of hydrogenation. For high molecular weight polymers (Mn>200,000 for example), the typical desired surface area can vary from 15 to 25 m2/g and the desired average pore diameter from 3,000 to 4000 angstroms. For lower molecular weight polymers (Mn<100,000 for example), the typical desired surface area can vary from 45 to 85 m2/g and the desired average pore diameter from 300 to 700 angstroms.

Silica supports are preferred and can be made by combining potassium silicate in water with a gelation agent, such as formamide, polymerizing and leaching as exemplified in US-A-4,112,032. The silica is then hydrothermally calcined as in Iler, R.K., The Chemistry of Silica, John Wiley and Sons, 1979, pp. 539-544, which generally consists of heating the silica while passing a gas saturated with water over the silica for about 2 hours or more at temperatures from 600°C to 850°C. Hydrothermal calcining results in a narrowing of the pore diameter distribution as well as increasing the average pore diameter. Alternatively, the support can be prepared by processes disclosed in Iler, R.K., The Chemistry of Silica, John Wiley and Sons, 1979, pp. 510-581.

A silica supported catalyst can be made using the process described in US-A-5,110,779. An appropriate metal, metal component, metal containing compound or mixtures thereof, can be deposited on the support by vapor phase deposition, aqueous or nonaqueous impregnation followed by calcination, sublimation or any other conventional method, such as those exemplified in Studies in Surface Science and Catalysis, "Successful Design of Catalysts" V. 44, pg. 146-158, 1989 and Applied Heterogeneous Catalysis pgs. 75-123, Institute Français du Pétrole Publications, 1987. In methods of impregnation, the appropriate metal containing compound can be any compound containing a metal, as previously described, which will produce a usable hydrogenation catalyst which is resistant to deactivation. These compounds can be salts, coordination complexes, organometallic compounds or covalent complexes.

Typically, the total metal content of the supported mixed catalyst is from 0.1 to 10 wt. percent based on the total weight of the silica supported catalyst. Preferable amounts are from 2 to 8 wt. percent, more preferably 0.5 to 5 wt. percent based on total catalyst weight.

Promoters, such as alkali, alkali earth or lanthanide containing compounds, can also be used to aid in the dispersion of the metal component onto the silica support or stabilization during the reaction, though their use is not preferred.

The amount of supported catalyst used in the hydrogenation process is much smaller than the amount required in conventional unsaturated polymer hydrogenation reactions due to the high reactivity of the hydrogenation catalysts. Generally, amounts of less than 1 gram of supported catalyst per gram of unsaturated polymer are used, with less than 0.1 gram being preferred and less than 0.05 being more preferred. The amount of supported catalyst used is dependent upon the type of process, whether it is continuous, semi-continuous or batch, and the process conditions, such as temperature, pressure and reaction time wherein typical reaction times may vary from 5 minutes to 5 hours. Continuous operations can typically contain 1 part by weight supported catalyst to 200,000 or more parts unsaturated polymer, since the supported catalyst is reused many times during the course of continuous operation. Typical batch processes can use 1 part by weight supported catalyst to 5,000 parts unsaturated polymer. Higher temperatures and pressures will also enable using smaller amounts of supported catalyst.

The hydrogenation reaction can be conducted in the absence of a solvent but is preferably conducted in a hydrocarbon solvent in which the polymer is soluble and which will not hinder the hydrogenation reaction. Preferably the solvent is a saturated solvent such as cyclohexane, methylcyclohexane, ethylcyclohexane, cyclooctane, cycloheptane, dodecane, dioxane, diethylene glycol dimethyl ether, tetrahydrofuran, isopentane, decahydronaphthalene or mixtures thereof, with cyclohexane being the most preferred.

The temperature at which the hydrogenation is conducted can be any temperature at which hydrogenation occurs without significant degradation of the polymer. Degradation of the polymer can be detected by a decrease in Mn, an increase in polydispersity or a decrease in glass transition temperature, after hydrogenation. Significant degradation in polymers having a polydispersity between 1.0 and 1.2 can be defined as an increase of 30 percent or more in polydispersity after hydrogenation. Preferably, polymer degradation is such that less than a 20 percent increase in polydispersity occurs after hydrogenation, most preferably less than 10 percent. In polymers having polydispersity greater than about 1.2, a significant decrease in molecular weight after hydrogenation indicates that degradation has occurred. Significant degradation in this case is defined as a decrease in Mn of 20 percent or more. Preferably, a Mn decrease after hydrogenation will be less than 10 percent. However, polymers such as poly-alpha-methylstyrene or other alpha substituted vinyl aromatic polymers which are more prone to polymer degradation, can tolerate a decrease in Mn of up to 30 percent.

Typical hydrogenation temperatures are from 40°C preferably from 100°C, more preferably from 110°C, and most preferably from 120°C to 250°C, preferably to 200°C, more preferably to 180°C, and most preferably to 170°C.

The pressure of the hydrogenation reaction is not critical, though hydrogenation rates increase with increasing pressure. Typical pressures range from atmospheric pressure to 70 MPa, with 0.7 to 10.3 MPa being preferred.

The reaction vessel is purged with an inert gas to remove oxygen from the reaction area. Inert gases include but are not limited to nitrogen, helium, and argon, with nitrogen being preferred.

The hydrogenating agent can be any hydrogen producing compound which will efficiently hydrogenate the unsaturated polymer. Hydrogenating agents include but are not limited to hydrogen gas, hydrazine and sodium borohydride. In a preferred embodiment, the hydrogenating agent is hydrogen gas.

The amount of olefinic hydrogenation can be determined using Infrared or proton NMR techniques. The amount of aromatic hydrogenation can be measured using UV-VIS spectroscopy. Cyclohexane solutions of polystyrene give a very distinct absorption band for the aromatic ring at about 260.5 nm. This band gives an absorbance of 1.000 with a solution concentration of .004980 moles of aromatic per liter in a 1 cm cell. After removing the catalyst via filtration (using a 0.50 micrometer (µm) "TEFLON™" filter, Millipore FHUP047) the reaction mixture is placed in a UV cell and the absorbance measured. The absorbance is dependent upon concentration. The hydrogenated polymer products are typically measured at higher concentrations since they are not diluted before the absorbance is measured. Since the reaction solution is 15 to 30 times more concentrated than the standards, small amounts of residual unsaturation can be accurately measured.

The level of hydrogenation of the block copolymer of the present invention is preferably greater than 95 percent of the conjugated diene polymer block and greater than 90 percent of the vinyl aromatic polymer block segments, more preferably greater than 99 percent of the conjugated diene polymer block and greater than 95 percent of the vinyl aromatic polymer block segments, even more preferably greater than 99.5 percent of the conjugated diene polymer block and greater than 98 percent of the vinyl aromatic polymer block segments, and most preferably greater than 99.9 percent of the conjugated diene polymer block and 99.5 percent of the vinyl aromatic polymer block segments. The term 'level of hydrogenation' refers to the percentage of the original unsaturated bonds which become saturated upon hydrogenation. The level of hydrogenation in hydrogenated vinyl aromatic polymers is determined using UV-VIS spectrophotometry, while the level of hydrogenation in hydrogenated diene polymers is determined using proton NMR.

The hydrogenated block copolymers of the present invention may be rigid, flexible or elastomeric, depending on the relative volumes of hydrogenated conjugated diene polymer and hydrogenated vinyl aromatic polymer block components. The hydrogenated block copolymers are typically rigid when the ratio of hydrogenated conjugated diene to hydrogenated vinyl aromatic is in the range of approximately 0.50 or less. Elastomeric block copolymers result when the ratio of hydrogenated conjugated diene to hydrogenated vinyl aromatic is in the range of approximately 1.5 and higher. Flexible block copolymer generally have ratios somewhere between the rigid and elastomer values.

Anionically polymerized block copolymers typically microphase separate into well-defined morphologies, with morphology dimensions typically ranging from 5 to 50 nanometers in size. Typical morphologies include a continuous matrix phase of one hydrogenated polymer with well-defined spheres, cylinders or gyroids of the minor phase hydrogenated polymer dispersed within the matrix, and a lamellar cocontinuous phase, wherein both hydrogenated polymers are in a continuous phase interspersed within each other. These different morphologies give rise to different physical properties. Hydrogenated block copolymers in which the hydrogenated conjugated diene polymer blocks are continuous are typically elastomeric, highly resilient materials. Conversely, materials in which the hydrogenated vinyl aromatic polymer block segments are the continuous phase are typically stiff, tough plastics. Hydrogenated block copolymers wherein both hydrogenated polymers are cocontinuous tend to have intermediate properties.

The polymers of the present invention have found particular usefulness in producing articles which have excellent balance of useful properties and easy processability. Specific applications which benefit from the advantages of the polymers of the present invention include thermoformed articles, injection molded articles, films, foams, film sheet, foam sheet, extruded articles and other fabricated articles.

## Claims

1. A hydrogenated block copolymer comprising at least two distinct blocks of hydrogenated vinyl aromatic polymer, and at least one block of hydrogenated conjugated diene polymer, **characterized by**:
a) a total number average molecular weight (Mnₜ) of from 30,000 to 120,000, wherein each hydrogenated vinyl aromatic polymer block (A) has a Mnₐ of from 5,000 to 50,000 and the hydrogenated conjugated diene polymer block (B) has a Mn_{b} of from 4,000 to 110,000; and
b) a hydrogenation level such that each hydrogenated vinyl aromatic polymer block has a hydrogenation level of greater than 90 percent and the hydrogenated conjugated diene polymer block has a hydrogenation level of greater than 95 percent.

2. The hydrogenated block copolymer of Claim 1, wherein the hydrogenated vinyl aromatic polymer is hydrogenated polystyrene.

3. The hydrogenated block copolymer of Claim 1, wherein the hydrogenated conjugated diene polymer is hydrogenated polybutadiene.

4. The hydrogenated block copolymer of Claim 3, wherein the hydrogenated polybutadiene is obtained from the hydrogenation of a polybutadiene having at least 40 weight percent 1,2-butadiene content, based on the weight of the polybutadiene block.

5. The hydrogenated block copolymer of Claim 3, wherein the hydrogenated polybutadiene is obtained from the hydrogenation of a polybutadiene having less than 40 weight percent 1,2-butadiene content, based on the weight of the polybutadiene block.

6. The hydrogenated block copolymer of Claim 1, wherein the hydrogenated conjugated diene polymer is hydrogenated polyisoprene.

7. The hydrogenated block copolymer of Claim 1, comprising from 10 to 90 weight percent hydrogenated vinyl aromatic polymer, based on the total weight of the hydrogenated block copolymer.

8. The hydrogenated block copolymer of Claim 1, comprising from 15 to 85 weight percent hydrogenated vinyl aromatic polymer, based on the total weight of the hydrogenated block copolymer.

9. The hydrogenated block copolymer of Claim 1, comprising at least 65 weight percent hydrogenated vinyl aromatic polymer, based on the total weight of the hydrogenated block copolymer.

10. The hydrogenated block copolymer of Claim 1, comprising from 10 to 90 weight percent hydrogenated conjugated diene polymer, based on the total weight of the hydrogenated block copolymer.

11. The hydrogenated block copolymer of Claim 1, comprising from 15 to 85 weight percent hydrogenated conjugated diene polymer, based on the total weight of the hydrogenated block copolymer.

12. The hydrogenated block copolymer of Claim 1, comprising at least 60 weight percent hydrogenated conjugated diene polymer, based on the total weight of the hydrogenated block copolymer.

13. The hydrogenated block copolymer of Claim 1, wherein the hydrogenated vinyl aromatic polymer block has a hydrogenation level of greater than 98 percent.

14. The hydrogenated block copolymer of Claim 1, wherein the hydrogenated vinyl aromatic polymer block has a hydrogenation level of greater than 99.5 percent.

15. The hydrogenated block copolymer of Claim 1, wherein each hydrogenated vinyl aromatic polymer block has a Mnₐ of from 10,000 to 45,000.

16. The hydrogenated block copolymer of Claim 15, wherein each hydrogenated conjugated diene polymer block has a Mn_{b} of from 5,000 to 90,000.

17. The hydrogenated block copolymer of Claim 1, wherein each hydrogenated vinyl aromatic polymer block has a Mnₐ of from 10,000 to 50,000.

18. The hydrogenated block copolymer of Claim 17, wherein each hydrogenated conjugated diene polymer block has a Mn_{b} of from 4,000 to 30,000.

19. The hydrogenated block copolymer of Claim 1, wherein each hydrogenated vinyl aromatic polymer block has a Mnₐ of from 5,000 to 20,000.

20. The hydrogenated block copolymer of Claim 19, wherein eacj hydrogenated conjugated diene polymer block has a Mn_{b} of from 35,000 to 110,000.

21. The hydrogenated block copolymer of Claim 1, having a total Mnₜ of from 40,000 to 100,000.

22. The hydrogenated block copolymer of Claim 1, having a total Mnₜ of from 50,000 to 80,000.

## Patentansprüche

1. Hydriertes Blockcopolymer, das mindestens zwei verschiedene Blöcke aus hydriertem aromatischen Vinylpolymer und mindestens einen Block aus hydriertem konjugierten Dienpolymer enthält, **gekennzeichnet durch**:
a) einen zahlenmittleres Gesamtmolekulargewicht (Mnₜ) von 30.000 bis 120.000, wobei jeder Block aus hydriertem aromatischen Vinylpolymer (A) ein Mnₐ von 5.000 bis 50.000 aufweist und der Block aus hydriertem konjugierten Dienpolymer (B) ein Mn_{b} von 4.000 bis 110.000 aufweist, und
b) einen Hydrierungsgrad, so dass jeder Block aus hydriertem aromatischen Vinylpolymer einen Hydrierungsgrad von größer als 90% aufweist und der Block aus hydriertem konjugierten Dienpolymer einen Hydrierungsgrad von gröBer als 95% aufweist.

2. Hydriertes Blockcopolymer nach Anspruch 1, worin das hydrierte aromatische Vinylpolymer hydriertes Polystyrol ist.

3. Hydriertes Blockcopolymer nach Anspruch 1, worin das hydrierte konjugierte Dienpolymer hydriertes Polybutadien ist.

4. Hydriertes Blockcopolymer nach Anspruch 3, worin das hydrierte Polybutadien aus der Hydrierung eines Polybutadiens mit mindestens 40 Gew.-% 1,2-Butadiengehalt, bezogen auf das Gewicht des Polybutadienblocks, erhalten wird.

5. Hydriertes Blockcopolymer nach Anspruch 3, worin das hydrierte Polybutadien aus der Hydrierung eines Polybutadiens mit weniger als 40 Gew.-% 1,2-Butadiengehalt, bezogen auf das Gewicht des Polybutadienblocks, erhalten wird.

6. Hydriertes Blockcopolymer nach Anspruch 1, worin das hydrierte konjugierte Dienpolymer hydriertes Polyisopren ist.

7. Hydriertes Blockcopolymer nach Anspruch 1, das 10 bis 90 Gew.-% hydriertes aromatisches Vinylpolymer, bezogen auf das Gesamtgewicht des hydrierten Blockcopolymers, enthält.

8. Hydriertes Blockcopolymer nach Anspruch 1, das 15 bis 85 Gew.-% hydriertes aromatisches Vinylpolymer, bezogen auf das Gesamtgewicht des hydrierten Blockcopolymers, enthält.

9. Hydriertes Blockcopolymer nach Anspruch 1, das mindestens 65 Gew.-% hydriertes aromatisches Vinylpolymer, bezogen auf das Gesamtgewicht des hydrierten Blockcopolymers, enthält.

10. Hydriertes Blockcopolymer nach Anspruch 1, das 10 bis 90 Gew.-% hydriertes konjugiertes Dienpolymer, bezogen auf das Gesamtgewicht des hydrierten Blockcopolymers, enthält.

11. Hydriertes Blockcopolymer nach Anspruch 1, das 15 bis 85 Gew.-% hydriertes konjugiertes Dienpolymer, bezogen auf das Gesamtgewicht des hydrierten Blockcopolymers, enthält.

12. Hydriertes Blockcopolymer nach Anspruch 1, das mindestens 60 Gew.-% hydriertes konjugiertes Dienpolymer, bezogen auf das Gesamtgewicht des hydrierten Blockcopolymers, enthält.

13. Hydriertes Blockcopolymer nach Anspruch 1, worin der Block aus hydriertem aromatischen Vinylpolymer einen Hydrierungsgrad von größer als 98% aufweist.

14. Hydriertes Blockcopolymer nach Anspruch 1, worin der Block aus hydriertem aromatischen Vinylpolymer einen Hydrierungsgrad von größer als 99,5% aufweist.

15. Hydriertes Blockcopolymer nach Anspruch 1, worin jeder Block aus hydriertem aromatischen Vinylpolymer ein Mnₐ von 10.000 bis 45.000 hat.

16. Hydriertes Blockcopolymer nach Anspruch 15, worin jeder Block aus hydriertem konjugierten Dienpolymer ein Mn_{b} von 5.000 bis 90.000 hat.

17. Hydriertes Blockcopolymer nach Anspruch 1, worin jeder Block aus hydriertem aromatischen Vinylpolymer ein Mnₐ von 10.000 bis 50.000 hat.

18. Hydriertes Blockcopolymer nach Anspruch 17, worin jeder Block aus hydriertem konjugierten Dienpolymer ein Mn_{b} von 4.000 bis 30.000 hat.

19. Hydriertes Blockcopolymer nach Anspruch 1, worin jeder Block aus hydriertem aromatischen Vinylpolymer ein Mnₐ von 5.000 bis 20.000 hat.

20. Hydriertes Blockcopolymer nach Anspruch 19, worin jeder Block aus hydriertem konjugierten Dienpolymer ein Mn_{b} von 35.000 bis 110.000 hat.

21. Hydriertes Blockcopolymer nach Anspruch 1, das ein Gesamt-Mnₜ von 40.000 bis 100.000 hat.

22. Hydriertes Blockcopolymer nach Anspruch 1, das ein Gesamt-Mnₜ von 50.000 bis 80.000 hat.

## Revendications

1. Copolymère séquencé hydrogéné comprenant au moins deux séquences distinctes de polymère aromatique vinylique hydrogéné et au moins une séquence de polymère de diènes conjugués hydrogéné, **caractérisé par** :
a) un poids moléculaire moyen en nombre total (Mnₜ) de 30.000 à 120.000, dans lequel chaque séquence de polymère aromatique vinylique hydrogéné (A) ayant un Mnₐ de 5.000 à 50.000 et la séquence de polymère de diènes conjugués hydrogéné (B) ayant un Mn_{b} de 4.000 à 110.000, et
b) un niveau d'hydrogénation tel que chaque séquence de polymère aromatique vinylique hydrogéné a un niveau d'hydrogénation supérieur à 90 pour cent et la séquence de polymère de diènes conjugués hydrogéné a un niveau d'hydrogénation supérieur à 95 pour cent.

2. Copolymère séquencé hydrogéné selon la, revendication 1, dans lequel le polymère aromatique vinylique hydrogéné est du polystyrène hydrogéné.

3. Copolymère séquencé hydrogéné selon la revendication 1, dans lequel le polymère de diènes conjugués hydrogéné est du polybutadiène hydrogéné.

4. Copolymère séquencé hydrogéné selon la revendication 3, dans lequel le polybutadiène hydrogéné est obtenu à partir de l'hydrogénation d'un polybutadiène ayant une teneur d'au moins 40 pour cent en poids de 1,2-butadiène, sur la base du poids de la séquence de polybutadiène.

5. Copolymère séquencé hydrogéné selon la revendication 3, dans lequel le polybutadiène hydrogéné est obtenu à partir de l'hydrogénation d'un polybutadiène ayant une teneur de moins de 40 pour cent en poids de 1,2-butadiène, sur la base du poids de la séquence de polybutadiène.

6. Copolymère séquencé hydrogéné selon la revendication 1, dans lequel le polymère de diènes conjugués hydrogéné est du polyisoprène hydrogéné.

7. Copolymère séquencé hydrogéné selon la revendication 1, comprenant de 10 à 90 pour cent en poids de polymère aromatique vinylique hydrogéné, sur la base du poids total du copolymère séquencé hydrogéné.

8. Copolymère séquencé hydrogéné selon la revendication 1, comprenant de 15 à 85 pour cent en poids de polymère aromatique vinylique hydrogéné, sur la base du poids total du copolymère séquencé hydrogéné.

9. Copolymère séquencé hydrogéné selon la revendication 1, comprenant au moins 65 pour cent en poids de polymère aromatique vinylique hydrogéné, sur la base du poids total du copolymère séquencé hydrogéné.

10. Copolymère séquencé hydrogéné selon la revendication 1, comprenant de 10 à 90 pour cent en poids de polymère de diènes conjugués hydrogéné, sur la base du poids total du copolymère séquencé hydrogéné.

11. Copolymère séquencé hydrogéné selon la revendication 1, comprenant de 15 à 85 pour cent en poids de polymère de diènes conjugués hydrogéné, sur la base du poids total du copolymère séquencé hydrogéné.

12. Copolymère séquencé hydrogéné selon la revendication 1, comprenant au moins 60 pour cent en poids de polymère de diènes conjugués hydrogéné, sur la base du poids total du copolymère séquencé hydrogéné.'

13. Copolymère séquencé hydrogéné selon la revendication 1, dans lequel la séquence de polymère aromatique vinylique hydrogéné a un niveau d'hydrogénation supérieur à 98 pour cent.

14. Copolymère séquencé hydrogéné selon la revendication 1, dans lequel la séquence de polymère aromatique vinylique hydrogéné a un niveau d'hydrogénation supérieur à 99,5 pour cent.

15. Copolymère séquencé hydrogéné selon la revendication 1, dans lequel chaque séquence de polymère aromatique vinylique hydrogéné a un Mnₐ de 10.000 à 45.000.

16. Copolymère séquencé hydrogéné selon la revendication 15, dans lequel chaque séquence de polymère de diènes conjugués hydrogéné a un Mn_{b} de 5.000 à 90.000.

17. Copolymère séquencé hydrogéné selon la revendication 1, dans lequel chaque séquence de polymère aromatique vinylique hydrogéné a un Mnₐ de 10.000 à 50.000.

18. Copolymère séquencé hydrogéné selon la revendication 17, dans lequel chaque séquence de polymère de diènes conjugués hydrogéné a un Mn_{b} de 4.000 à 30.000.

19. Copolymère séquencé hydrogéné selon la revendication 1, dans lequel chaque séquence de polymère aromatique vinylique hydrogéné a un Mnₐ de 5.000 à 20.000.

20. Copolymère séquencé hydrogéné selon la revendication 19, dans lequel chaque séquence de polymère de diènes conjugués hydrogéné a un Mn_{b} de 35.000 à 110.000.

21. Copolymère séquencé hydrogéné selon la revendication 1, ayant un Mnₜ total de 40.000 à 100.000.

22. Copolymère séquencé hydrogéné selon la revendication 1, ayant un Mnₜ total de 50.000 à 80.000.
